# EUROPEAN PATENT SPECIFICATION

(11) **EP 2 599 600 B1**
(45) Date of publication and mention of the grant of the patent: **25.10.2017**
(21) Application number: 12194465.6
(22) Date of filing: 27.11.2012
(51) Int. Cl.: B27B 27/02, B27F 5/02, B27B 5/04

(54) **Edge sawing machine**
Kantensägemaschine
Machine à scier les angles

(30) Priority: 29.11.2011 SE 1151134
(43) Date of publication of application: 05.06.2013
(73) Proprietor: Byström, Mattias, 871 40 Härnösand (SE)
(72) Inventor: Byström, Mattias, 871 40 Härnösand (SE)
(74) Representative: Awapatent AB

(56) References cited:
- CH-A- 248 053
- DE-U1- 29 818 925
- US-A- 955 379
- US-A- 3 771 397
- US-A- 5 823 240
- US-A1- 2005 166 514
- US-A1- 2006 096 428
- US-A1- 2006 137 764

## Description

The present invention relates to an edge sawing machine for simultaneously parallel sawing of opposite longitudinal edges and by that width adjustment of a piece of wood, comprising a feed table, which at an upper side defines a feeding plane along which the piece of wood is to be fed in the longitudinal direction during the sawing, as well as a first and a second circular saw blade, which are rotatable in the same direction of rotation but of which the first circular saw blade is rotatably arranged on a rotation shaft, which is located below the feeding plane, while the second circular saw blade is rotatably arranged on a rotation shaft which is located above the feeding plane, having to result that one of the circular saw blades during sawing, affects the piece of wood with a force that acts against a feeding direction for the wood, while the other of the circular saw blades affects the piece of wood with a force that acts in the feeding direction, wherein the position of at least one of the circular saw blades is adjustable in the longitudinal direction of the rotation shaft to allow adjustment of the sawing distance between the two circular saw blades.

### Background of the invention

Since long time ago it is known edge sawing machines or edging mills of many different types and sizes which by means of at least two sawing members, for example ribbon saws, circular saw blades or frame saw blades, accomplish simultaneously parallel sawing of two opposite longitudinal edges of a piece of wood which is fed in the longitudinal direction through the machine for the purpose of straight or linear sawing of the longitudinal edges and width adjusting of the piece of wood. The type of wood piece that normally, but not exclusively, is a possible choice for sawing in such edge sawing machines are untrimmed boards, girders and planks, which have been produced by rip sawing of whole logs of wood and which for this reason are provided with wanes along their longitudinal edges and whose portions free of wanes have a tapering width towards the top end. Accordingly, such pieces of wood have no straight sawn longitudinal edge which can be brought to bear against a guide and serve as a reference edge during continued straight split sawing of the piece of wood. Therefore, to above all accomplish a linear sawing having a high accuracy, it is necessary to provide such edge sawing machines with strong feeding devices in front of as well as behind the sawing members which guide the piece of wood with a large force during the feeding to prevent lateral displacements. Such strong feeding devices are expensive to manufacture and may cause, particularly by small-scale edge sawing machines, that the costs for the feeding devices will represent an unreasonable large part of the total cost for the machine.

At edge sawing machines which are provided with two or more circular saw blades, each of these are normally rotatably arranged on a rotation shaft which is located below a feeding plane, which is defined at an upper side of a feed table, and is driven in such a direction of rotation that they affect the piece of wood with a force acting against the feeding direction. Hereby arises a great risk for back throw of the piece of wood against the feeding direction and either there have to be arranged special back throw safety devices, which will cause additional costs, or the feeding devices have to be dimensioned to prevent also such back throw which will contribute to additional increase in cost for these.

Through SU 1530445, which discloses the preamble of claim 1, an edge sawing machine is previously known, which is provided with two circular saw blades. These rotate in the same direction but are arranged such that one of the circular saw blades is rotatably arranged on a rotation shaft, which is located below a feeding plane of a feed table, while the other circular saw blade is rotatably arranged on a rotation shaft which is located above the feeding plane. The direction of rotation for the circular saw blades is such that the lower saw blade affects the piece of wood with a force that is directed against the feeding direction, while the upper saw blade affects the piece of wood with a force that is directed in the feeding direction and accordingly contributes to the feeding of the wood. By arranging the saw blades in this way the risk for back throw of the wood is decreased considerably in that the saw blades affect the wood with opposite directed forces, which essentially offset each other and possible back throw safety devices or the feeding devices do not need to be dimensioned to take up large back throw forces. Still, the feeding devices have to be so powerful dimensioned that lateral displacement of the wood is prevented during sawing.

### Summary of the invention

The object of the invention is to provide an edge sawing machine, which has a simple and cost saving structure in that the one or more feeding devices can be dimensioned for relatively small forces. At least this object is achieved by an edge sawing machine according to claim 1.

At least the above object can be achieved by an edge sawing machine, which is provided with circular saw blades, at which the circular saw blades are arranged in such a way that a first saw blade is rotatably arranged on a rotation shaft, which is located beneath a feeding plane for the wood and a second saw blade is rotatably arranged on a rotation shaft, which is located above the feeding plane, and the saw blades have the same direction of rotation. Thereby, one of the saw blades, the counter feed sawing saw blade, will affect the piece of wood with a force that is directed against the feeding direction for the wood, while the other, the down feed sawing saw blade, will affect the piece of wood with a force which is directed in the feeding direction. The basis of the invention is the insight that the piece of wood which is sawn in the machine will be affected, due to the combination of one counter feed sawing and one down feed sawing blade, by a turning moment, which will strive to carry the sawn part of the wood towards the side of the machine where the counter feed sawing saw blade is located. In accordance with the invention, this condition is utilized to achieve, in a simple way, a very stable, straight-lined feeding and thereby straight sawing with high precision of the piece of wood in that a guide, which at least in an operative portion has a thickness which do not exceed the thickness of the saw blade, is arranged in alignment with and behind at least the counter feed sawing saw blade. In the following description and claims the saw blade which is rotatably arranged on a rotation shaft that is located beneath the feeding plane, will for simplicity's sake normally be called first and/or lower saw blade. In a corresponding way the saw blade which is rotatably arranged on a rotation shaft that is located above the feeding plane will normally be called second and/or upper saw blade.

Within the technology for sawing by means of circular saw blades it is known to arrange so called cleavers in the area immediately behind the respective saw blade which in most cases are formed as an upward directed and upward tapering fin of sheet metal, which conforms to the curvature of the saw blade and has a thickness that approximately corresponds the thickness of the saw blade. However, such cleavers have nothing to do with guiding of the sawn wood but aims only for to prevent that the wood is squeezed around the saw blade from each side during the sawing or that the saw teeth of the blade can grip the wood at the upward motion of the rear portion of the saw blade, which both can lead to overheating of the saw blade and/or that the wood is thrown upwards. Such cleavers are not sufficient rigid and/or are not sufficient firmly fixated sideways in relation to the saw blade to be able to serve as a wood directing guide, which they neither have to be to be able to fulfill their function as the cleaver will be self-centering in the saw cut behind the saw blade. Neither do they have sufficient large length in the feeding direction so that they could be serving as a wood directing guide since the length in most cases is no more than 5-10 cm. A guide according to the present invention on the other hand has sufficient rigidness, is securely fixated in the correct position in relation to the saw blade and has a sufficient length in the feeding direction to be able to allow straight-lined sawing of pieces of wood. It is evident that the ability of the guide to accomplish a straight-lined feeding of pieces of wood through the machine is increased the larger length the guide has and as a rule the guide ought to have a length that is at least as large as the half diameter of the saw blade, preferably at least 30 cm and most preferred have a length between 0,5 - 2 m to achieve an acceptable straight-lined feeding of the pieces of wood. As a rule it is preferred that the guide is positioned with its forward end with a small distance immediately behind the counter feed sawing saw blade but the distance could also be considerably longer and possible up to 10 - 20 cm. However, the bigger the distance is the bigger will the risk be that the forward end of the sawn wood will get caught on the forward edge of the guide. In the hereinafter described and illustrated exemplary embodiments the operative portion of the guide has the form of a continuous metal plate. It should however be understood that it also could be composed of several separate elements, which are arranged with a little spacing from each other in the feeding direction. For example several metal plates, each having a relatively short length in the feeding direction or several vertically after one another arranged pins having a circular cross section.

In claim 1 it is stated that an operative portion of the guide has a thickness which do not exceed the thickness of the saw blade. By the expression "an operative portion of the guide" is meant a portion of the guide which is located within a vertical area where pieces of wood that are sawn passes by the guide, i.e. at least within an area from the feeding plane that is defined by the feed table, up to an upper edge of the guide, in the case the guide is fixated only in its lower part and has a height that is lower than the thickest pieces of wood which are intended to be sawn in the machine, or to a height over the feeding plane which corresponds to the maximum thickness of the pieces of wood that are intended to be sawn in the edge sawing machine in the case the guide also or only is attached in its upper part. In most cases the guide does not need to reach high above the feeding plane since it usually is sufficient that the guide directs a lower part of a side edge surface of the pieces of wood. Above a height which corresponds to the maximum thickness of the pieces of wood that are intended to be sawn in the edge sawing machine, the guide may according to the invention comprise for example stiffening flanges and/or fastening devices such that the guide will be able to withstand relatively large lateral forces without bending, despite the fact that it has so thin cross section in its operative portion such that it do not exceed the thickness of the saw blade, for the purpose of being able to in a reliable way direct pieces of wood without lateral displacement and accomplish a straight-lined sawing.

In the hereinafter described and in the drawings illustrated exemplary embodiments, the single guide is arranged in alignment with and behind the lower saw blade, which has a direction of rotation such that it affects the wood with a force which is directed towards the feeding direction of the wood (a counter feed sawing saw blade), i.e. the sawing upper portion of the saw blade has a component of motion which is directed against the feeding direction. Moreover, this saw blade is stationary arranged such that it cannot be displaced in the direction of the rotation shaft. The other, upper saw blade has the same direction of rotation as the first saw blade and will accordingly affect the wood with a force which is directed in the feeding direction of the wood (a down feed sawing saw blade), since it is sawing with its lower portion which has a motion component which is directed in the feeding direction. Moreover, this saw blade is adjustable in the direction of the rotation shaft by displacement of the motor in order to allow adjustment of the distance between the saw blades and thereby enable sawing of the wood in different widths. However, it should be understood that the displaceable characteristics in the direction of the rotation shaft could be achieved in some other way than displacement of the entire motor, e.g. by displacement of the rotation shaft in relation to the motor or displacement of the saw blade along the rotation shaft.

However, an edge sawing machine according to the invention can be modified and designed in many different ways within the scope of the overall inventive idea. For example, a guide could be mounted also behind the down feed sawing saw blade, which affects the wood with a force in the feeding direction, but such a guide should probably not have any larger practical function, at least not for ensuring a straight-lined sawing as with the first guide. In case a guide is arranged behind a saw blade which is adjustable in the longitudinal direction of the rotation shaft, irrespective of if it is arranged behind a saw blade which affects the wood with a force directed against or in the feeding direction, it has to be adjustable together with the saw blade which necessitate special arrangements to be able to accomplish this and therefore causes cost increasing design solutions.

Moreover, the direction of rotation of the saw blades could be such that the first, lower saw blade affects the wood with a force acting in the feeding direction while the other, upper saw blade affects the wood with a force acting against the feeding direction and accordingly should a guide be arranged at least in alignment with and behind the upper saw blade. However, such an embodiment is not preferred while in this case both of the saw blades will additionally affect the piece of wood with a component force acting in a direction upwards from the feed table in that the sawing portion of the respective saw blade also has a component motion directed upwards such that the wood tend to be lifted from the feed table. Therefore, the feeding devices must in such a case be designed to be able to prevent such a lifting of the wood. With the direction of rotation of the saw blades according to the exemplary embodiments described hereinafter and illustrated in the drawings, the force from the saw blades acts downwards since the sawing portion of the respective saw blade also has a component motion which is directed downwards such that the piece of wood will be forced towards the feed table.

In the following exemplary embodiments it is the second, upper saw blade that is adjustable in the longitudinal direction of the rotation shaft. However, alternatively the first, lower saw blade could be adjustable instead. This would however lead to the disadvantage that a groove, which is formed in the feed table to be able to displace the saw blade in the longitudinal direction of the rotation shaft, has to be made considerably wider than if it is the upper saw blade that is adjustable. An alternative to this would be to arrange the entire feed table displaceable together with the saw blade, but such an embodiment is probably considerably more complicated and expensive to achieve.

At an embodiment according to the claims 6 and 7, the feed table is so designed that it at a longitudinal edge of the feed table lacks any forms of delimiting devices in an area above the feeding plane within which pieces of wood to be sawn are to be fed, preferably at the longitudinal edge of the feed table that is located closest to the upper saw blade. This is done with the object to allow sawing of pieces of wood having a larger width than the width of the feed table and is particular advantageous at small-scale edge sawing machines to restrict the total width of the machine and minimize the need for material and thereby also costs.

Furthermore, the feed table can be formed in many different ways. In the following exemplary embodiments the feed table includes a plate, which in the area before and after the saw blades is provided with rotational drivable rolls whose upper peripheries are located somewhat above the plate and moves the wood forward during the sawing. Accordingly, the feeding plane is in this case a plane which interconnects the upper peripheries of the rolls. However, the feed table could also be completely constituted of driven or not driven, rotatable rolls. Also feed tables in form of chain or belt conveyors could be conceivable, wherein a first conveyor could end immediately in front of the saw blades and a second conveyor could begin immediately behind the same.

In the hereinafter illustrated and described first embodiment, the guide has the form of a 90° angle section, wherein a horizontal part of the angle section is attached on the underside of the feed table plate while a vertical part of the angle section is reaching up through a slot in the feed table plate to a height of about 20-50 mm above the feed table and has a free upper edge. However, many other embodiments of the guide could be conceivable within the scope of the inventive idea. Normally, the guide need not reach particular high above the feeding plane since it usually is sufficient if the guide directs only the lower edge portion of the respective piece of wood.

In the second embodiment the guide is attached to a connecting device above the feed table. Such a connecting device has to be arranged on a distance above the feed table which is larger than the thickest pieces of wood to be sawn in the edge sawing machine. Attaching the guide only in its upper edge and not in its lower, e.g. in the feed table, can be particular advantageous in case the guide is arranged in alignment with and behind a saw blade which is displaceably adjustable in the longitudinal direction of its rotation shaft since the guide then can be displaced entirely independent from the feed table.

Due to the fact that the counter feed sawing and the down feed sawing saw blades affect the wood with forces that essentially cancel each other out, an edge sawing machine according to the invention could be designed without any specially arranged back throw safety device, which normally is a requirement from public authorities. By this the manufacturing costs could be reduced.

### Brief description of the drawings

Embodiments of the invention will hereinafter be described with reference to de accompanying drawings, in which are schematically shown in:
- Fig 1: a cross section through an edge sawing machine according to a first embodiment of the invention as seen in the feeding direction;
- Fig 2: a longitudinal section through the edge sawing machine as seen from the right side in Fig. 1;
- Fig 3: a view from above of the edge sawing machine according to Figs. 1 and 2;
- Fig 4: a cross section as seen against the feeding direction through the sawing portion of the edge sawing machine according to Figs. 1-3;
- Fig 5: a partly cut through perspective view of an edge sawing machine according to a second embodiment of the invention which is provided with a guide, which is arranged in the area above the feed table;
- Fig 6: an exploded perspective view of the guide and its connecting device according to Fig. 5;
- Fig 7: a longitudinal section through the edge sawing machine according to Figs. 6 and 7;
- Fig 8: a cross section along the line VIII-VIII in Figs. 7 and 9; and
- Fig 9: a partly cut through view from above of the edge sawing machine according to Figs. 5-8.

### Detailed description of embodiments of the invention

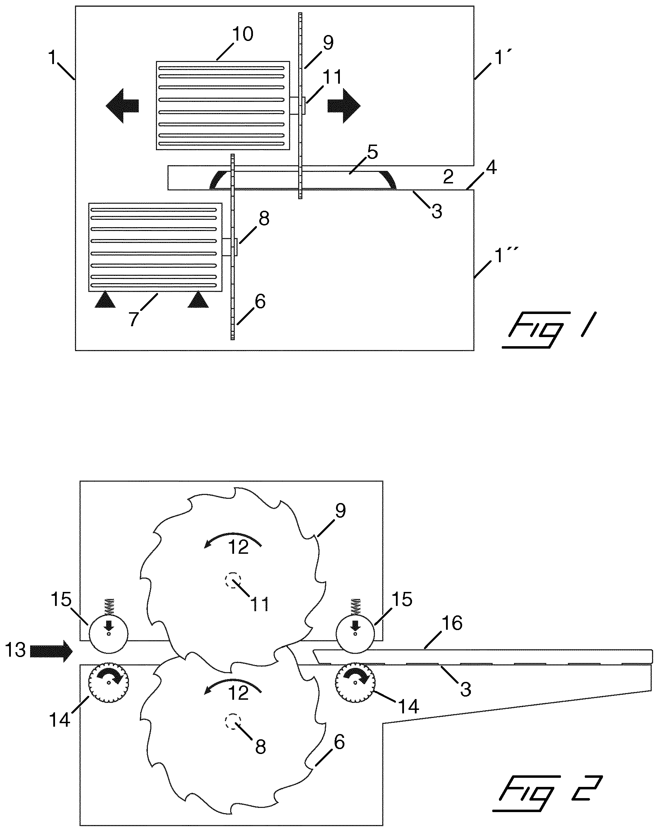

Reference is first made to Figs. 1 and 2 in which an inventive edge sawing machine according to a first embodiment is shown in a schematic cross section as seen in the feeding direction and a longitudinal section as seen from the right side in Fig. 1. The edge sawing machine is incorporated in a box formed casing 1, which includes a horizontal feeding slot 2, which is defined downwards by a feed table 3, which on the upper side defines a feeding plane 4 along which wood 5 to be sawn, are fed through the machine. The feeding slot 2 extends in the longitudinal direction through the entire machine, i.e. in the feeding direction as is evident from Fig. 2. In the lateral direction, on the other hand, the feeding slot has a limited extension to the left as seen in the feeding direction according to Fig. 1, while it along its right longitudinal edge lacks all forms of delimiting devices in an area above the feeding plane 4 within which the wood to be sawn is to be fed. The latter involves a great advantage because by this, pieces of wood being considerably wider than the width of the feed table can be sawn.

The box formed casing 1 is consequently formed by an upper part 1' and a lower part 1", which are interconnected along the left edge as seen in the feeding direction. In the lower part 1" a first, lower circular saw blade 6 is arranged, which is driven by a stationary mounted first motor 7 via a rotation shaft 8 which consequently are located below the feed table 3. An upper portion of the saw blade projects upwards above the feed table through a not shown slot in the same, for sawing from beneath of pieces of wood which are fed along the feed table. A second, upper circular saw blade 9, which is parallel to the first saw blade, is arranged in the upper part 1' of the casing. This saw blade is driven by a second motor 10 via a rotation shaft 11, which consequently is located above the feed table and the sawing of the wood is accordingly performed from above by a lower portion of the saw blade. The very lowest portion of the saw blade extends a bit downward below the feeding plane of the feed table through a not shown recess in the feed table. This second motor is, in contrast to the first, displaceably arranged in the direction of the rotation shaft, in a not closer shown way, to allow adjusting of the distance between the first and second saw blades and by this sawing of the wood in different widths. Consequently, the recess in the feed table for the second saw blade must have a width which at least corresponds to the maximum displaceable distance for the saw blade.

From the longitudinal section in Fig. 2 it appears that the rotation shaft 11 of the second saw blade 9 is located in the same vertical plane above the rotation shaft 8 of the first saw blade 6. In this way the sawing machine can be made very short and compact. However, it should be understood that the rotation shafts of the saw blades also could be displaced positioned in relation to each other in different vertical planes. As is also evident, both of the saw blades have the same direction of rotation according to the rotary arrows 12. More particular, the direction of rotation is such that the lower saw blade 6, which is sawing the wood with its upper portion, during sawing, will affect the wood with a force which is directed against the feeding direction of the wood, which is illustrated by a feeding arrow 13, which means that it is a counter feed sawing saw blade. The upper saw blade 9 on the other hand, which is sawing the wood with its lower portion, will affect the wood with a force directed in a feeding direction of the wood, which means that it is a down feed sawing saw blade. Both of the saw blades also affect the wood with a component force directed downwards towards the feed table such that the wood will be forced towards the same.

In Fig. 2 is illustrated that the feed table also comprises two feeding devices, which during the sawing feed the wood through the machine and which each has a lower, rotary driven feeding roll 14, the upper envelope surface of which is located immediately above the upper surface of the feed table 3, as well as an upper idler pressure roll 15, which forces the wood downwards towards the feed table and the respective feeding roll. In the figure is also shown a guide 16, which according to the invention is arranged in alignment with and behind the counter feed sawing saw blade, which in this case is the lower saw blade 6.

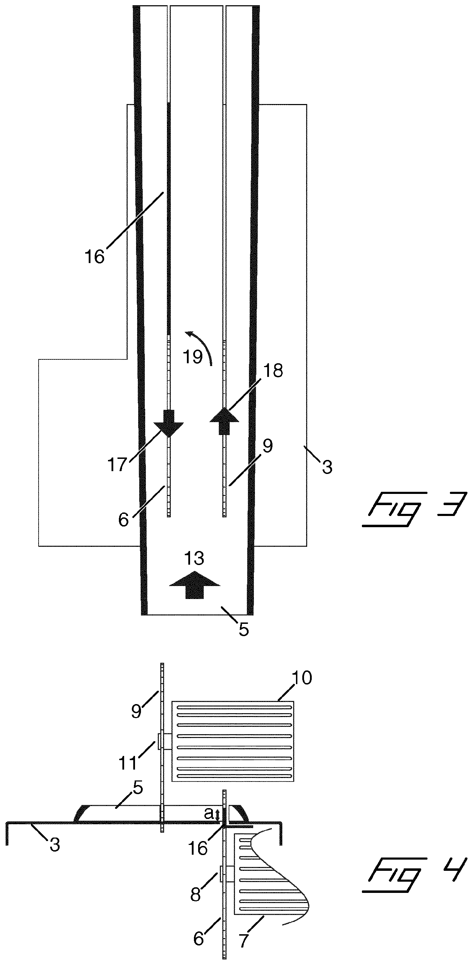

Fig. 3 discloses schematically the edge sawing machine in a view from above with the upper part of the casing removed such that the feed table 3, the lower 6 and the upper 9 saw blade and the guide 16 are clearly visible. On the feed table a piece of wood 5 is positioned, which is being sawn and is fed through the machine in the direction of the feeding arrow 13. A first force arrow 17 shows the direction of a force by which the lower saw blade 6 affects the wood 5, while a second force arrow 18 shows the direction of the force by which the upper saw blade 9 affects the wood. As is apparent, the lower and upper saw blades affect the wood with forces which are opposite directed and essentially similar in size. The risk for back throw of the wood is thereby drastically decreased since the forces essentially offset each other. Furthermore, the opposite directed action forces lead to that the wood being sawn will be affected by a turning moment, which is illustrated by a curved arrow 19 in Fig. 3, i.e. the portion of the wood that already has been sawn, and accordingly has passed the saw blades, will be forced in the direction towards the side where the counter feed sawing saw blade is positioned, which in this embodiment is the lower saw blade 6. This condition is utilized according to the invention such that the guide 16 is positioned in alignment with and behind this saw blade and by the fact that the wood always is forced towards the one and same direction by the force influence from the saw blades, it is possible to achieve a very reliable straight-lined sawing with a large precision and with a device which is simple and inexpensive, namely by means of one single guide 16 positioned in alignment with and behind the counter feed rotating saw blade 6, towards which a sawn longitudinal edge of the wood is constantly forced and guided during the feeding.

One condition for being able to use a guide 16 in the above described way to achieve a secure and reliable straight-lined guiding of the wood, is that the guide has a thickness which do not exceed the thickness of the saw blade in at least an operative portion of the guide. By an operative portion of the guide is meant the portion of the guide which comes into contact with and guides the wood. In Fig. 4 is shown an enlarged cross section through the feed table 3, the guide 16 and portions of the saw blades 6, 9 during sawing of a piece of wood 5. The operative portion of this guide extends from the feeding plane 4 up to the upper edge of the guide 16, i.e. the distance denoted a in the figure. The guide is attached to the feed table by the guide being flanged 90° in its lower portion and being screwed to the underside of the feed table. Accordingly, here the guide has a thickness which widely exceeds the thickness of the saw blade, but that has no importance while it is in a location which is not part of an operative portion of the guide since it is positioned below the feeding plane.

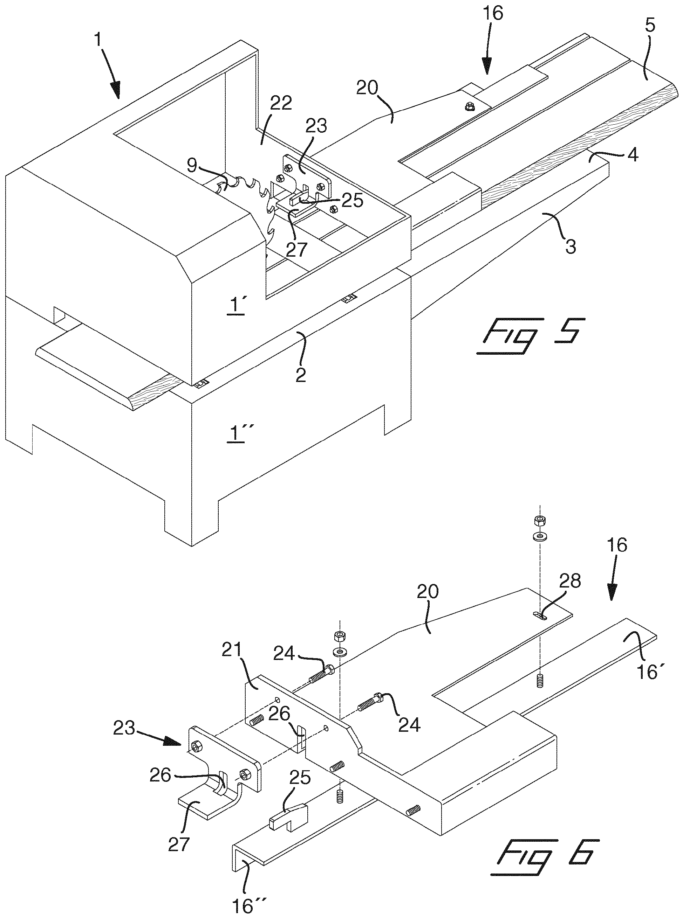

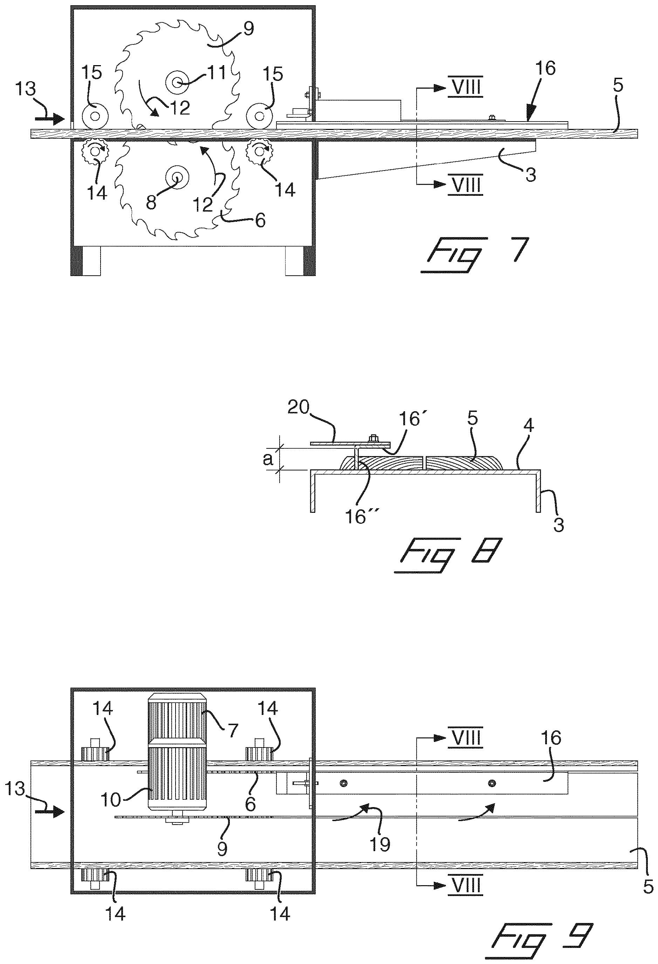

Referring now to Figs. 5-9, in which an edge sawing machine according to a second embodiment of the invention is disclosed at which the guide 16 in its entirety is arranged and attached in the area above the feed table 3 and the feeding plane 4. In analogy with the first embodiment this edge sawing machine comprises a box-formed casing 1, including an upper part 1' and a lower part 1", a feed table 3, a first, lower saw blade 6 whose rotation shaft 8 is located below the feed table and whose upper portion extends above the feed table, a second, upper saw blade 9 whose rotation shaft 11 is located above the feed table and which is displaceable in the direction of the rotation shaft. Both saw blades have the same direction of rotation according to the rotation arrows 12 in Fig. 7 such that the lower saw blade 6 affects the wood with a force which is directed against the feeding direction 13 of the wood 5, i.e. a counter feed sawing saw blade, while the upper saw blade 9 affects the wood with a force which is directed in the feeding direction of the wood, i.e. a down feed sawing saw blade. In a similar way the feed table is also provided with two feeding devices, which each includes a lower, rotatably driven feeding roll 14 and an upper, idler press roll 15.

The upper part 1' of the box formed casing 1 is partly cut-through in Fig. 5 for disclosing of the connection of the guide 16 to the edge sawing machine. The guide and a connecting device are also shown separately in an exploded perspective view in Fig. 6. The connecting device comprises a horizontally extended bracket plate 20, which in a rear edge is provide with a vertically upward extended flange 21, which is adapted to bear against and be secured by screws against the outer side of a rear wall 22 of the casing 1. 23 denote an angle bracket which is adapted to be mounted on the inside of the wall 22 of the casing such that the wall is clamped between the flange 21 and the angle bracket by means of through screws 24. The guide 16 has the form of an angle section having a horizontal attachment part 16'and a vertical wood guiding part 16". In the forward portion of the guide an upward directed hook-shaped formation 25 is arranged which, when the guide is mounted towards the bottom side of the bracket plate 20, extends into a slot 26 formed in the angle bracket 23, the flange 21 and the wall 22 and by displacing the guide forward, the hook-shaped formation may engage in and be suspended from a horizontal part 27 of the angle bracket, as appears from Figs. 5, 7 and 9. In addition to this connection the guide 16 is connected by two screws through holes 28 in the bracket plate 20 of which only one is visible in the figures. The holes 28 are elliptical in a direction transverse to the feeding direction to allow some lateral displacement and by this fine adjustment of the guide's straight-lined guiding of the wood.

The function of and the principle for the second embodiment of the edge sawing machine, according to Figs. 5-9, are essentially identical with the first embodiment according to Figs. 1-4. The most important difference is that in the second embodiment the guide 16 is in its entirety located and mounted in the area above the feed table 3, while in the first embodiment the guide is mounted below the feed table. One advantage with this is that, as best appears from Fig. 8, no groove for the guide has to be formed in the feed table which makes the manufacture of the feed table simpler and the structural strength higher, which can be utilized to reduce the material thickness in the feed table and by this lower the costs. The maximal thickest pieces of wood which can be sawn with an edge sawing machine according to this second embodiment of the invention are pieces of wood having a thickness being less than the distance *a* between the bottom side of the horizontal attachment part 16' and the feeding plane 4 as defined by the feed table 3, which also correspond to the operative portion of the guide.

## Claims

1. An edge sawing machine for simultaneously parallel sawing of opposite longitudinal edges and by that width adjustment of a piece of wood (5), comprising a feed table (3), which at an upper side defines a feeding plane (4) along which the piece of wood is to be fed in the longitudinal direction during the sawing, as well as a first and a second circular saw blade, which are rotatable in the same direction (12) of rotation but of which the first circular saw blade (6) is rotatably arranged on a rotation shaft (8), which is located below the feeding plane, while the second circular saw blade (9) is rotatably arranged on a rotation shaft (11) which is located above the feeding plane, having to result that one of the circular saw blades during sawing, affects the piece of wood with a force (17) that acts against a feeding direction (13) of the wood, while the other of the circular saw blades affects the piece of wood with a force (18) that acts in the feeding direction, wherein the saw blades are arranged such that their rotational planes are located at a distance from each other and such that the position of at least one of the circular saw blades is adjustable in the longitudinal direction of the rotation shaft to allow adjustment of the sawing distance between the two circular saw blades, and wherein the saw blades overlap each other and are both arranged to saw through the entire thickness of the piece of wood such that an uppermost point of the first or lower saw blade is located above the feeding plane by a distance which is larger than the thickness of the piece of wood with the largest thickness to be sawn by the sawing machine, and a lowermost point of the second or upper saw blade is located below the feeding plane, **characterized in that** a guide (16) is arranged in alignment with and in the area behind the saw blade that affects the piece of wood (5) with a force (17) directed against the feeding direction (13), wherein at least an operative portion (a) of the guide has a thickness that do not exceed the thickness of the saw blade.

2. The edge sawing machine according to claim 1, **characterized in that** it is provided with a guide (16) in alignment with and in the area behind only the saw blade that affects the piece of wood (5) with a force (18) directed against the feeding direction (13).

3. The edge sawing machine according to claim 1 or 2, **characterized in that** the direction (12) of rotation of the saw blades is such that the first saw blade (6) affects the piece of wood (5) with a force (17) directed against the feeding direction (13), wherein the guide (16) is arranged in alignment with and behind the first saw blade.

4. The edge sawing machine according to any of the preceding claims, **characterized in that** the guide (16) only is connected to the feed table (3).

5. The edge sawing machine according to any of the preceding claims, **characterized in that** the operative portion (a) of the guide (16) extends between the feeding plane (4) and an upper free edge of the guide.

6. The edge sawing machine according to any of the claims 1-3, **characterized in that** the guide (16) only is connected to a connecting device (20, 23) located above the feed table (3).

7. The edge sawing machine according to claim 6, **characterized in that** the operative portion (a) of the guide (16) extends between the feeding plane (4) and the connecting device (20, 23).

8. The edge sawing machine according to any of the preceding claims, **characterized in that** the first saw blade (6) has a fixed position while the second saw blade (9) is adjustable in the longitudinal direction of the rotation shaft (11).

9. The edge sawing machine according to any of the preceding claims, **characterized in that** the guide (16) has a length which is at least as large as half of the diameter of the saw blade.

10. The edge sawing machine according to any of the preceding claims, **characterized in that** the guide (16) has a length of at least 30 cm.

11. The edge sawing machine according to any of the preceding claims, **characterized in that** the guide (16) has a length of between 0,5-2 m.

12. The edge sawing machine according to any of the preceding claims, **characterized in that** the operative portion (a) of the guide (16) has a height of between 20-50 mm.

13. The edge sawing machine according to any of the preceding claims, **characterized in that** the machine lacks a specially adapted back throw safety device.

14. The edge sawing machine according to any of the preceding claims, **characterized in that** the feed table (3) at a longitudinal edge lacks all forms delimiting devices in an area above the feeding plane (4) within which pieces of wood to be sawn are to be fed, in order to allow sawing of pieces of wood (5) having a larger width than the width of the feed table.

15. The edge sawing machine according to claim 14, **characterized in that** the feed table (3) lacks all forms delimiting devices in an area above the feeding plane (4) within which pieces of wood to be sawn are to be fed, at the longitudinal edge of the feed table which is located closest to the second saw blade (9).

## Patentansprüche

1. Kantensägemaschine zum gleichzeitigen parallelen Sägen von gegenüberliegenden Längskanten und dadurch Breiteneinstellen eines Holzstücks (5), die einen Zufuhrtisch (3), der an einer oberen Seite eine Zuführungsebene (4) definiert, entlang derer während des Sägens das Holzstück in der Längsrichtung zugeführt werden soll, sowie ein erstes und ein zweites Kreissägeblatt, die in der gleichen Drehrichtung (12) drehbar sind, umfasst, von denen aber das erste Kreissägeblatt (6) drehbar auf einer Drehwelle (8) angeordnet ist, die sich unterhalb der Zuführungsebene befindet, während das zweite Kreissägeblatt (9) drehbar auf einer Drehwelle (11) angeordnet ist, die sich oberhalb der Zuführungsebene befindet, was zum Ergebnis hat, dass das eine der Kreissägeblätter während des Sägens das Holzstück mit einer Kraft (17) angreift, die gegen eine Zuführungsrichtung (13) des Holzes wirkt, während das andere der Kreissägeblätter das Holzstück mit einer Kraft (18) angreift, die in der Zuführungsrichtung wirkt, wobei die Sägeblätter derart angeordnet sind, dass sich ihre Drehebenen in einem Abstand voneinander befinden, und derart, dass die Position wenigstens eines der Kreissägeblätter in der Längsrichtung der Drehwelle einstellbar ist, um eine Einstellung des Sägeabstandes zwischen den zwei Kreissägeblättern zu ermöglichen, und wobei die Sägeblätter einander überlappen und beide dafür angeordnet sind, durch die gesamte Dicke des Holzstücks zu sägen, so dass sich ein oberster Punkt des ersten oder unteren Sägeblattes um einen Abstand oberhalb der Zuführungsebene befindet, der größer ist als die Dicke des Holzstücks mit der größten Dicke, das durch die Sägemaschine gesägt werden soll, und sich ein unterster Punkt des zweiten oder oberen Sägeblattes unterhalb der Zuführungsebene befindet, **dadurch gekennzeichnet, dass** eine Führung (16) in Ausrichtung mit und in dem Bereich hinter demjenigen Sägeblatt angeordnet ist, welches das Holzstück (5) mit einer Kraft (17) angreift, die gegen die Zuführungsrichtung (13) gerichtet ist, wobei wenigstens ein wirksamer Abschnitt (a) der Führung eine Dicke hat, welche die Dicke des Sägeblattes nicht überschreitet.

2. Kantensägemaschine nach Anspruch 1, **dadurch gekennzeichnet, dass** sie mit einer Führung (16) in Ausrichtung mit und in dem Bereich nur hinter demjenigen Sägeblatt versehen ist, welches das Holzstück (5) mit einer Kraft (18) angreift, die gegen die Zuführungsrichtung (13) gerichtet ist.

3. Kantensägemaschine nach Anspruch 1 oder 2, **dadurch gekennzeichnet, dass** die Drehrichtung (12) der Sägeblätter derart ist, dass das erste Sägeblatt (6) das Holzstück (5) mit einer Kraft (17) angreift, die gegen die Zuführungsrichtung (13) gerichtet ist, wobei die Führung (16) in Ausrichtung mit und hinter dem ersten Sägeblatt angeordnet ist.

4. Kantensägemaschine nach einem der vorhergehenden Ansprüche, **dadurch gekennzeichnet, dass** die Führung (16) nur mit dem Zufuhrtisch (3) verbunden ist.

5. Kantensägemaschine nach einem der vorhergehenden Ansprüche, **dadurch gekennzeichnet, dass** sich der wirksame Abschnitt (a) der Führung (16) zwischen der Zuführungsebene (4) und einer oberen freien Kante der Führung erstreckt.

6. Kantensägemaschine nach einem der Ansprüche 1 bis 3, **dadurch gekennzeichnet, dass** die Führung (16) nur mit einer Verbindungseinrichtung (20, 23) verbunden ist, die sich oberhalb des Zufuhrtisches (3) befindet.

7. Kantensägemaschine nach Anspruch 6, **dadurch gekennzeichnet, dass** sich der wirksame Abschnitt (a) der Führung (16) zwischen der Zuführungsebene (4) und der Verbindungseinrichtung (20, 23) erstreckt.

8. Kantensägemaschine nach einem der vorhergehenden Ansprüche, **dadurch gekennzeichnet, dass** das erste Sägeblatt (6) eine unbewegliche Position hat, während das zweite Sägeblatt (9) in der Längsrichtung der Drehwelle (11) einstellbar ist.

9. Kantensägemaschine nach einem der vorhergehenden Ansprüche, **dadurch gekennzeichnet, dass** die Führung (16) eine Länge hat, die wenigstens halb so groß ist wie der Durchmesser des Sägeblattes.

10. Kantensägemaschine nach einem der vorhergehenden Ansprüche, **dadurch gekennzeichnet, dass** die Führung (16) eine Länge von wenigstens 30 cm hat.

11. Kantensägemaschine nach einem der vorhergehenden Ansprüche, **dadurch gekennzeichnet, dass** die Führung (16) eine Länge von zwischen 0,5 und 2 m hat.

12. Kantensägemaschine nach einem der vorhergehenden Ansprüche, **dadurch gekennzeichnet, dass** der wirksame Abschnitt (a) der Führung (16) eine Höhe von zwischen 20 und 50 mm hat.

13. Kantensägemaschine nach einem der vorhergehenden Ansprüche, **dadurch gekennzeichnet, dass** der Maschine eine besonders angepasste Rückschlag-Sicherheitseinrichtung fehlt.

14. Kantensägemaschine nach einem der vorhergehenden Ansprüche, **dadurch gekennzeichnet, dass** dem Zufuhrtisch (3) an einer Längskante alle Formbegrenzungseinrichtungen in einem Bereich oberhalb der Zuführungsebene (4), innerhalb dessen zu sägende Holzstücke zugeführt werden sollen, fehlen, um das Sägen von Holzstücken (5) zu ermöglichen, die eine Breite haben, die größer ist als die Breite des Zufuhrtisches.

15. Kantensägemaschine nach Anspruch 14, **dadurch gekennzeichnet, dass** dem Zufuhrtisch (3) alle Formbegrenzungseinrichtungen in einem Bereich oberhalb der Zuführungsebene (4), innerhalb dessen zu sägende Holzstücke zugeführt werden sollen, an der Längskante des Zufuhrtisches, die sich dem zweiten Sägeblatt (9) am nächsten befindet, fehlen.

## Revendications

1. Machine à scier les bords pour le sciage parallèle simultané de bords longitudinaux opposés pour le réglage de la largeur d'un morceau de bois (5), comprenant une table d'alimentation (3) définissant un plan d'alimentation (4) sur un côté supérieur, le long duquel le morceau de bois est censé être alimenté dans la direction longitudinale pendant le sciage, ainsi qu'une première et une deuxième lame de scie circulaire, lesquelles peuvent tourner dans la même direction de rotation (12) mais parmi lesquelles la première lame de scie circulaire (6) est disposée de façon rotative sur un arbre de rotation (8) situé en dessous du plan d'alimentation, tandis que la deuxième lame de scie circulaire (9) est disposée de façon rotative sur un arbre de rotation (11) situé au-dessus du plan d'alimentation, moyennant quoi l'une des lames de scie circulaires agit sur le morceau de bois pendant le sciage avec une force (17) agissant contre une direction d'alimentation (13) du bois, tandis que l'autre des lames de scie circulaires agit sur le morceau de bois avec une force (18) agissant dans la direction d'alimentation, les lames de scie étant disposées de telle façon que leurs plans de rotation se trouvent à une distance l'un de l'autre et que la position de l'une au moins des lame des scie circulaires est réglable dans la direction longitudinale de l'arbre de rotation pour permettre le réglage de la distance de sciage entre les deux lames de scie circulaires, et les lames de scies se chevauchant entre elles et étant toutes deux disposées de manière à scier à travers toute l'épaisseur du morceau de bois, de sorte qu'un point supérieur de la première ou de la deuxième lame de scie se trouve au-dessus du plan d'alimentation selon une distance supérieure à l'épaisseur du morceau de bois avec la plus grande épaisseur à scier par la machine à scier, et un point inférieur de la première ou de la deuxième lame de scie se trouve en dessous du plan d'alimentation, **caractérisée en ce qu'**un guide (16) est disposé en alignement avec et dans la zone derrière la lame de scie agissant sur le morceau de bois (5) avec une force (17) dirigée contre la direction d'alimentation (13), au moins une partie opérationnelle (a) du guide présentant une épaisseur ne dépassant pas l'épaisseur de la lame de scie.

2. Machine à scier les bords selon la revendication 1, **caractérisée en ce que** celle-ci est dotée d'un guide (16) en alignement avec et dans la zone derrière la seule lame de scie agissant sur le morceau de bois (5) avec une force (18) dirigée contre la direction d'alimentation (13).

3. Machine à scier les bords selon la revendication 1 ou 2, **caractérisée en ce que** la direction de rotation (12) des lames de scie est telle que la première lame de scie (6) agit sur le morceau de bois (5) avec une force (17) dirigée contre la direction d'alimentation (13), le guide (16) étant disposé en alignement avec et derrière la première lame de scie.

4. Machine à scier les bords selon l'une quelconque des revendications précédentes, car le guide (16) seulement est relié à la table d'alimentation (3).

5. Machine à scier les bords selon l'une quelconque des revendications précédentes, **caractérisée en ce que** la partie opérationnelle (a) du guide (16) s'étend entre le plan d'alimentation (4) et un bord libre supérieur du guide.

6. Machine à scier les bords selon l'une quelconque des revendications 1 à 3, **caractérisée en ce que** le guide (16) seul est relié à un dispositif de connexion (20, 23) situé au-dessus de la table d'alimentation (3).

7. Machine à scier les bords selon la revendication 6, **caractérisée en ce que** la partie opérationnelle (a) du guide (16) s'étend entre le plan d'alimentation (4) et le dispositif de connexion (20, 23).

8. Machine à scier les bords selon l'une quelconque des revendications précédentes, **caractérisée en ce que** la première lame de scie (6) a une position fixe tandis que la deuxième lame de scie (9) est réglable dans la direction longitudinale de l'arbre de rotation (11).

9. Machine à scier les bords selon l'une quelconque des revendications précédentes, **caractérisée en ce que** le guide (16) présente une longueur au moins aussi grande que la moitié du diamètre de la lame de scie.

10. Machine à scier les bords selon l'une quelconque des revendications précédentes, **caractérisée en ce que** le guide (16) présente une longueur d'au moins 30 cm.

11. Machine à scier les bords selon l'une quelconque des revendications précédentes, **caractérisée en ce que** le guide (16) présente une longueur entre 0,5 et 2 m.

12. Machine à scier les bords selon l'une quelconque des revendications précédentes, **caractérisée en ce que** la partie opérationnelle (a) du guide (16) présente une hauteur entre 20 et 50 mm.

13. Machine à scier les bords selon l'une quelconque des revendications précédentes, **caractérisée en ce que** la machine est dépourvue d'un dispositif de sécurité anti-renvoi spécialement adapté.

14. Machine à scier les bords selon l'une quelconque des revendications précédentes, **caractérisée en ce que** la table d'alimentation (3) sur un bord longitudinal est dépourvue de toute forme de dispositif de délimitation dans une zone au-dessus du plan d'alimentation (4) dans laquelle des morceaux de bois à scier sont censés être alimentés, afin de permettre le sciage de morceaux de bois (5) présentant une largeur plus grande que la largeur de la table d'alimentation.

15. Machine à scier les bords selon la revendication 14, **caractérisée en ce que** la table d'alimentation (3) est dépourvue de toute forme de dispositif de délimitation dans une zone au-dessus du plan d'alimentation (4) dans laquelle des morceaux de bois à scier sont censés être alimentés, sur le bord longitudinal de la table d'alimentation le plus proche de la deuxième lame de scie (9).
